(19)

Europäisches
Patentamt
European
Patent Office
Office européen
des brevets

(11) **EP 4 604 256 A1**

(12) **EUROPEAN PATENT APPLICATION**
published in accordance with Art. 153(4) EPC

(43) Date of publication:
**20.08.2025   Bulletin 2025/34**

(21) Application number: **24881815.5**

(22) Date of filing: **05.12.2024**

(51) International Patent Classification (IPC):
***H01M 10/0587*** (2010.01)

(52) Cooperative Patent Classification (CPC):
**H01M 10/0525; H01M 10/0587;** Y02E 60/10;
Y02P 70/50

(86) International application number:
**PCT/CN2024/136980**

(87) International publication number:
**WO 2025/087456 (01.05.2025 Gazette 2025/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **21.06.2024   CN 202421425011 U**

(71) Applicant: **Shenzhen Bak Power Battery Co., Ltd.
Shenzhen, Guangdong 518119 (CN)**

(72) Inventors:
  • **WANG, Jinshan
    Shenzhen, Guangdong 518119 (CN)**
  • **QIU, Mo
    Shenzhen, Guangdong 518119 (CN)**

  • **GUO, Xinlu
    Shenzhen, Guangdong 518119 (CN)**
  • **HUANG, Ling
    Shenzhen, Guangdong 518119 (CN)**
  • **SUN, Yunlong
    Shenzhen, Guangdong 518119 (CN)**
  • **TANG, Yunqi
    Shenzhen, Guangdong 518119 (CN)**
  • **AI, Xianfeng
    Shenzhen, Guangdong 518119 (CN)**
  • **AN, Weifeng
    Shenzhen, Guangdong 518119 (CN)**
  • **LI, Fengmei
    Shenzhen, Guangdong 518119 (CN)**

(74) Representative: **Manitz Finsterwald
    Patent- und Rechtsanwaltspartnerschaft mbB
    Martin-Greif-Straße 1
    80336 München (DE)**

(54) **JELLY ROLL ASSEMBLY AND WOUND BATTERY**

(57)      Disclosed is a wound core assembly comprising a positive electrode plate, a negative electrode plate, and a separator therebetween, with a central mandrel hole at its winding center. The termination edge of the positive electrode plate adjacent to the central mandrel hole is configured with an inclined segment that has two ends along its longitudinal axis respectively positioned at widthwise edges of the positive electrode plate, or the terminal edge is structured as a convex or concave edge; and/or, the termination edge of the negative electrode plate adjacent to the central mandrel hole is configured with an inclined segment, or a convex edge, or a concave edge. The inclined/convex/concave edges angled relative to the central mandrel hole's axis resolve stress into circumferential/axial components. Housing constraints counteract axial stress, reducing circumferential stress to prevent mandrel hole deformation, electrode bending, or fractures.

**FIG. 1**

EP 4 604 256 A1

**Description**

**TECHNICAL FIELD**

The present disclosure relates to battery electrode winding structures, and more specifically, to wound core assemblies and wound batteries.

**BACKGROUND**

Lithium-ion batteries and sodium-ion batteries are two novel types of rechargeable batteries characterized by high energy density, compact structure, rapid discharge rates, low self-discharge rates, and extended cycle life. These attributes have enabled their widespread adoption in digital devices, power battery systems, and energy storage applications.

During practical cycling operations of lithium-ion batteries, lithium ions undergo repeated intercalation into and deintercalation from the electrodes. Specifically, during charging phase, lithium ions intercalate into a negative electrode, inducing volumetric expansion of the negative electrode; while during discharging phase, lithium ions deintercalate from the negative electrode, resulting in negative electrode contraction.

The expansion or contraction of the negative electrode may generate stress within the electrode plates. In cylindrical batteries constrained by external steel casings, the stress generated during wound core expansion or contraction continuously acts upon the internal cell components. This cumulative stress may induce central deformation of the cell and electrode plate misalignment, thereby causing mechanical failures including electrode folding, wrinkling, or even fracture.

**SUMMARY OF THE INVENTION**

The present disclosure is directed to a rolled electrode assembly that reduces bending, wrinkling, or fracture of electrode plates caused by stress generated during cyclic expansion and contraction of the negative electrodes.

According to a first aspect of the present disclosure, a wound core assembly provided in some embodiments may include a positive electrode plate and a negative electrode plate, with a separator disposed between the positive electrode plate and the negative electrode plate, the wound core assembly having a central mandrel hole at a winding center thereof, wherein: the termination edge of the positive electrode plate adjacent to the central mandrel hole is configured with an inclined segment, two ends of the inclined segment along its longitudinal axis are respectively positioned at widthwise edges of the positive electrode plate, or the termination edge is structured as a convex edge, or the termination edge is structured as a concave edge;

and/or, the termination edge of the negative electrode plate adjacent to the central mandrel hole is configured with an inclined segment, two ends of the inclined segment along its longitudinal axis are respectively positioned at widthwise edges of the negative electrode plate, or the termination edge is structured as a convex edge, or the termination edge is structured as concave edge.

In some embodiments, the convex edge is an axisymmetric structure, and the symmetry axis of the convex edge is aligned with the widthwise geometric midline of the positive electrode plate or the negative electrode plate.

In some embodiments, the concave edge is an axisymmetric structure, the symmetry axis of the concave edge coincides with the widthwise geometric midline of the positive electrode plate or the negative electrode plate.

In some embodiments, the convex edge has an arc-shaped protrusion as its contour.

In some embodiments, the concave edge has an arc-shaped recess as its contour.

In some embodiments, the two ends of the inclined segment along its longitudinal axis intersect with the widthwise edges of the positive electrode plate or the negative electrode plate.

In some embodiments, the inclined segment occupies a number of winding turns (n) of the positive electrode plate or the negative electrode plate, where n satisfies $0.1 \leq n \leq 5$.

In some embodiments, the two ends of the inclined segment along its longitudinal axis are connected to the widthwise edges of the positive electrode plate or the negative electrode plate via fillets; or two ends of the convex edge are connected to the widthwise edges of the positive electrode plate or the negative electrode plate via fillets; or two ends of the concave edge are connected to the widthwise edges of the positive electrode plate or the negative electrode plate via fillets.

In some embodiments, the separator includes a first separator and a second separator; wherein along a radial direction away from the central mandrel hole, the negative electrode plate, the first separator, the positive electrode plate, and the second separator are arranged in sequential stacked layers.

According to another aspect of the present disclosure, a wound battery provided in some embodiments may include: a wound core assembly as mentioned in above embodiments, and a housing configured to accommodate the wound core assembly and provided inside with an electrolyte.

According to the wound core assembly and the wound battery mentioned in the above embodiments, the positive electrode plate and/or the negative electrode plate are provided with an inclined segment, a convex edge or a concave edge. Each of the inclined segment, the convex edge and the concave edge comprises a portion angled relative to the axial direction of the central mandrel hole. When stress generated by expansion/contraction of the wound core acts on the inclined portion, the stress is resolved into a circumferential stress component along the electrode plate's circumferential direction and an axial stress component along the axial direction of the central mandrel hole. Since the exterior of the wound core assembly is constrained by the housing, the axial stress component is counteracted by the housing, and the remaining circumferential stress component is relatively reduced, thereby preventing deformation of the central mandrel hole, bending/wrinkling of the electrode plates, or fracture risks.

## BRIEF DESCRIPTION OF THE DRAWINGS

FIG. 1 is a schematic perspective schematic view of the wound core assembly according to the present disclosure;
FIG. 2 is a schematic top view of the wound core assembly according to the present disclosure;
FIG. 3 is a schematic diagram showing an inclined segment on the termination edge of the electrode plate in the wound core assembly according to the present disclosure;
FIG. 4 is a schematic diagram showing a convex edge on the termination edge of the electrode plate in the wound core assembly according to the present disclosure;
FIG. 5 is a schematic diagram showing a concave edge on the termination edge of the electrode plate in the wound core assembly according to the present disclosure;
FIG. 6 is a schematic diagram showing the uncut termination edge of the electrode plate in the wound core assembly according to the present disclosure;
FIG. 7 is a schematic diagram showing the resolution of the stress on the inclined portion after cutting the electrode plate in the wound core assembly according to the present disclosure;
FIG. 8 is a schematic diagram of a representative structural unit of the wound core assembly according to the present disclosure; and
FIG. 9 is a schematic diagram showing the winding configuration of the wound core assembly according to the present disclosure.

List of Reference Numerals:

1    positive electrode plate
2    negative electrode plate
3    central mandrel hole
4    first separator
5    second separator
6    termination edge
61   inclined segment
62   convex edge
63   concave edge
7    round corner

## DETAILED DESCRIPTION

Specific embodiments of the present disclosure will now be described in detail with reference to the accompanying drawings. Similar or related components in different embodiments are labeled with associated reference numerals. The following embodiments include detailed descriptions to facilitate understanding of the present disclosure. However, those skilled in the art will readily recognize that certain features may be omitted under specific circumstances or substituted by other components, materials, or methods. In some instances, certain operations related to the present disclosure are not explicitly described or illustrated herein. This intentional exclusionis intentional to avoid obscuring the core technical solutions of the present disclosure. For those skilled in the art, a complete understanding of these operations can be attained through the descriptions provided in this specification and general technical knowledge in the art.

Additionally, the features, operations, or characteristics described in the specification may be combined in any suitable manner to form various embodiments. Operational steps in the embodiments may be reordered or modified in ways that would be obvious to those skilled in the art. Therefore, the specification and drawings are intended solely to clarify the description of specific embodiments and do not imply mandatory components and/or .

The numerical designations assigned to components in this specification, such as 'first,' 'second,' or similar ordinal terms, serve solely to distinguish described objects and carry no inherent sequential or technical implications. Furthermore, the terms 'connected' and 'coupled' as used herein encompass both direct and indirect connection (coupling), unless explicitly stated otherwise.

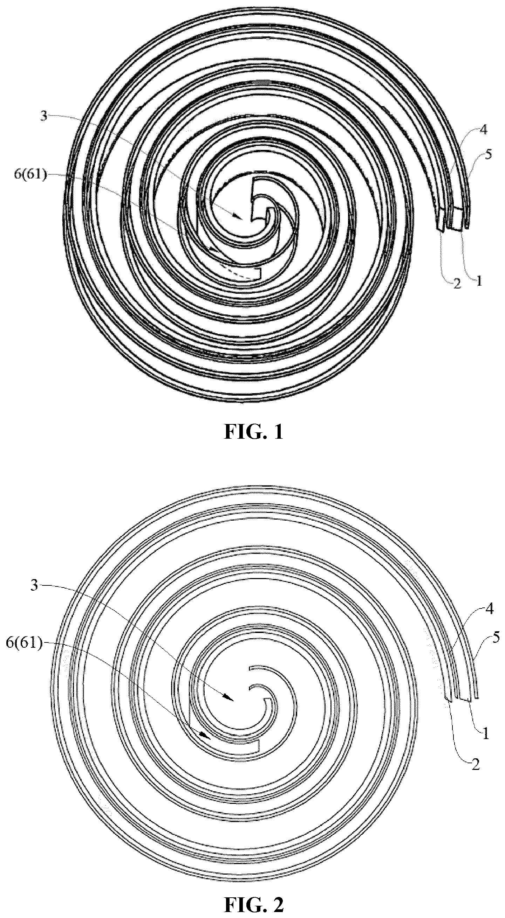

As shown in FIG. 1 and FIG. 2, a wound core assembly in some embodiments of the present disclosure may include a positive electrode plate 1 and a negative electrode plate 2, with a separator disposed between the positive electrode plate 1 and the negative electrode plate 2. The wound core assembly has a central mandrel hole 3 formed at its winding center. The positive electrode plate 1 and the negative electrode plate 2 are collectively referred to as electrode plates. Specifically, the wound core assembly is formed by stacking and winding in the sequence of: the separator, the positive electrode plate 1, the separator, and the negative electrode plate 2, wherein the winding center defines the central mandrel hole 3.

The termination edge 6 at the end of the positive electrode plate 1 adjacent to the central mandrel hole 3 is configured with an inclined segment 61, with two ends of the inclined segment 61 along its longitudinal axis respectively positioned at opposing widthwise edges of the positive electrode plate 1; or the termination edge 6 is configured as a convex edge; or the termination edge 6 is configured as a concave edge 63. Additionally or alternatively, the termination edge 6 at the end of the negative electrode plate 2 adjacent to the central mandrel hole 3 is configured with an inclined segment 61, with two ends of the inclined segment 61 along its longitudinal axis respectively positioned at opposing widthwise edges of the negative electrode plate 2; or the termination edge 6 is configured as the convex edge 62; or the termination edge 6 is configured as the concave edge 63.

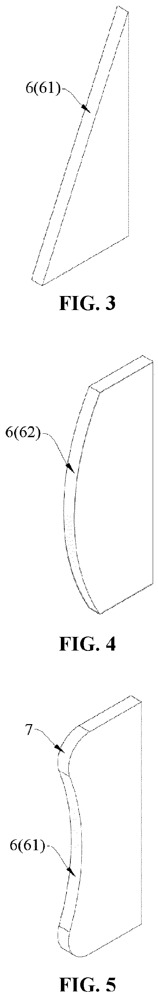

Specifically, the configuration where the termination edge 6 at the end of the electrode plate adjacent to the central mandrel hole 3 is configured with the inclined segment 61, with two ends of the inclined segment 61 along its longitudinal axis respectively positioned at opposing widthwise edges of the negative electrode plate 2, may be understood as the following two scenarios: (1) as shown in FIG. 3, the entire termination edge 6 is inclined; and (2) only a portion of the termination edge 6 is inclined, for example, only the middle portion of the termination edge 6 is inclined, wherein the inclined segment 61 occupies at least two-thirds of the termination edge 6.

The inclined segment 61 may adopt a linear inclined configuration, a convex inclined configuration, a concave inclined configuration, or any combination thereof.

The configuration where the termination edge 6 is structured as a convex edge 62 may be understood as follows: as shown in FIG. 4, a portion of the end of the electrode plate adjacent to the central mandrel hole 3 protrudes outward. The configuration where the termination edge 6 is structured as a concave edge 63 may be understood as follows: as shown in FIG. 5, a portion of the end of the electrode plate adjacent to the central mandrel hole 3 is recessed inward.

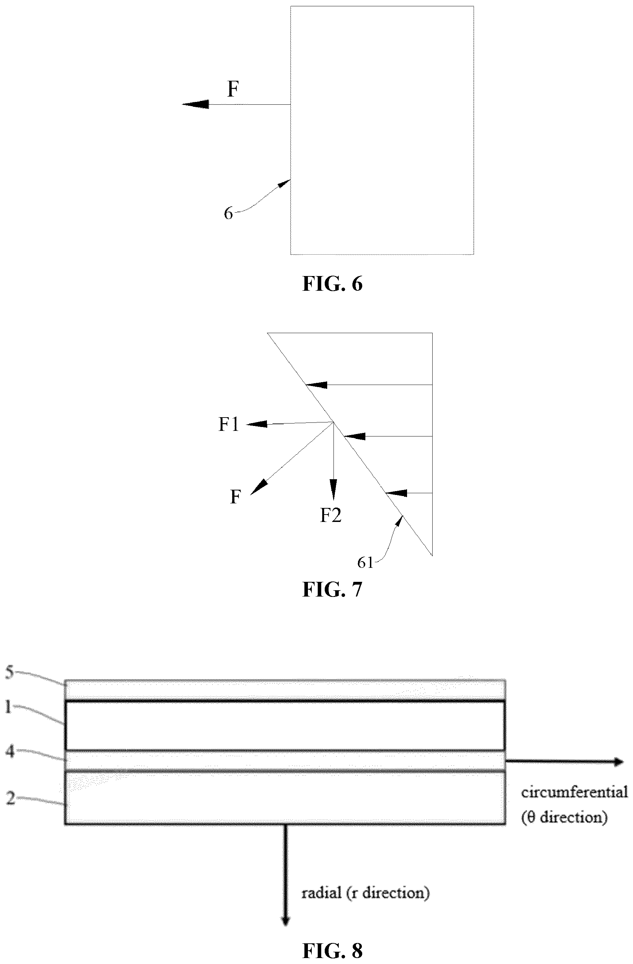

The inclined segment 61, the convex edge 62, and the concave edge 63 each comprise a portion inclined relative to the axial direction of the central mandrel hole 3. As shown in FIG. 6, when stresses generated during expansion and contraction of the wound core act on the inclined portion, the inclined portion resolves the stresses into a circumferential stress component along the electrode plate's circumferential direction and an axial stress component along the axial direction of the central mandrel hole 3. Here, the "circumferential direction" refers to the winding extension direction along the termination edge 6 of the electrode plate. Since the exterior of the wound core assembly is constrained by its housing, the axial stress component (parallel to the central mandrel hole 3) is transmitted to the housing, and the remaining circumferential stress component is relatively small, thereby mitigating risks of: deformation of the central mandrel hole; bending, wrinkling or fracture of the electrode plate; poor adhesion between positive and negative electrode plates; and lithium plating due to localized stress concentration.

It should be understood that the termination edge 6 of the electrode plate may adopt three optional structural configurations: being provided with an inclined segment 61, being configured as a concave edge 63, or being configured as a convex edge 62. Specifically, the termination edge 6 may be any one of these three configurations. At least one of the positive electrode plate 1 and the negative electrode plate 2 is provided with the termination edge 6 in any of the aforementioned configurations.

In some embodiments, as shown in FIG. 4, the convex edge 62 is configured as an axisymmetric structure, with its symmetry axis located precisely at the midpoint of the width direction of either the positive electrode plate 1 or the negative electrode plate 2. For instance, when the width direction of the electrode plate corresponds to the vertical orientation in the figure, and the convex edge 62 exhibits a vertically symmetric configuration. The convex edge 62 includes inclined portions on both sides of the symmetry axis capable of resolving stress toward the axial direction of the central mandrel hole 3. Such an arrangement ensures symmetrical stress distribution on the convex edge 62 of the electrode plate, minimizes positional deviation of the electrode plate, maintains good adhesion between the positive and negative electrode plates 2, and effectively prevents lithium deposition.

In some embodiments, as shown in FIG. 5, the concave edge 63 is configured as an axisymmetric structure, with its symmetry axis being positioned at the central position along the width direction (i.e. the widthwise geometric midline) of the positive electrode plate 1 or the negative electrode plate 2. For example, the width direction of the electrode plate corresponds to the vertical orientation in the figure, and the concave edge 63 exhibits a vertically symmetric configuration. The concave edge 63 includes inclined portions on both sides of the symmetry axis capable of resolving stress toward the axial direction of the central mandrel hole 3. Such an arrangement ensures symmetrical stress distribution on the concave edge 63 of the electrode plate, minimizes positional deviation of the electrode plate, maintains good adhesion between the positive and negative electrode plates 2, and effectively prevents lithium deposition.

In some embodiments, as shown in FIG. 4, the contour of the convex edge 62 may be configured as an arc-shaped protrusion.

In other embodiments, the contour of the convex edge 62 may be configured as an angular protrusion.

In some embodiments, as shown in FIG. 5, the contour of the concave edge 63 may be an arc-shaped recess.

In other embodiments, the contour of the concave edge 63 may be an angular recess.

In some embodiments, as shown in FIGS. 1-3, both ends of the inclined segment 61 along its length direction intersect with the widthwise edges of the positive electrode plate 1 or the negative electrode plate 2; that is, the termination edge 6 of the end of the electrode plate adjacent to the central mandrel hole 3 is arranged in an inclined manner.

As shown in FIGS. 6-7, the inclined segment 61 may be formed by cutting the electrode plate. The inclined segment 61 can resolves the applied stress F into a circumferential stress component F1 and an axial stress component F2 relative to the central mandrel hole 3. The axial stress component F2, acting on the housing along the axial direction of the central mandrel hole 3, is counterbalanced by the housing, meanwhile the circumferential stress component F1 remains a magnitude lower than the original stress F, with the circumferential component F1 being gradiently distributed along the inclined segment 61. This stress configuration synergistically achieves minimal deformation tolerance in the central mandrel hole 3, enhanced adhesion between the positive and negative electrode plates 2, and effective suppression of lithium deposition phenomena.

In some embodiments, as shown in FIG. 1, the inclined segment 61 occupies $n$ number of winding turns of the positive electrode plate 1 or the negative electrode plate 2, where $0.1 \leq n \leq 5$. For example, when $n=1$, this configuration indicates that the inclined segment 61 is disposed on the first turn of the positive electrode plate 1 or the negative electrode plate 2 starting from the central mandrel hole 3.

In some embodiments, two ends of the inclined segment 61 along its length direction are connected to the widthwise edges of the positive electrode plate 1 or the negative electrode plate 2 via fillets. The fillets are configured to prevent formation of sharp corners at both ends of the inclined segment 61, thereby reducing risks of damaging the separator by the electrode plate.

In some embodiments, two ends of the convex edge 62 are connected to the widthwise edges of the positive electrode plate 1 or the negative electrode plate 2 via fillets. The fillets are configured to prevent formation of sharp corners at both ends of the convex edge 62, thereby reducing risks of damaging the separator by the electrode plate.

In some embodiments, two ends of the concave edge 63 are connected to the widthwise edges of the positive electrode plate 1 or the negative electrode plate 2 via fillets 7. The fillets 7 are configured to prevent formation of sharp corners at both ends of the concave edge 63, thereby reducing risks of damaging the separator by the electrode plate.

In some embodiments, as shown in FIGS. 1-2, the separator includes a first separator 4 and a second separator 5; and in the direction away from the central mandrel hole 3, the negative electrode plate 2, the first separator 4, the positive electrode plate 1, and the second separator 5 are sequentially arranged. The termination edge 6 of the positive electrode plate 1 is provided with an inclined segment 61. The inclined segment 61 may be formed by cutting the positive electrode plate 1. The cutting of the positive electrode plate 1 not only reduces mechanical stress concentrations but also ensures that the capacity of the negative electrode plate 2 exceeds the total delithiated lithium amount from the positive electrode plate 1 during lithiation, thereby effectively suppressing lithium deposition phenomena.

The following describes a wound battery according to embodiments of the present disclosure.

The wound battery according to the embodiments of the present disclosure includes the wound core assembly mentioned in any of the preceding embodiments and a housing. The housing is configured to accommodate the wound core assembly and contains an electrolyte.

The derivation process for the offset of electrodes in the wound core assembly of the present disclosure under stress is described below.

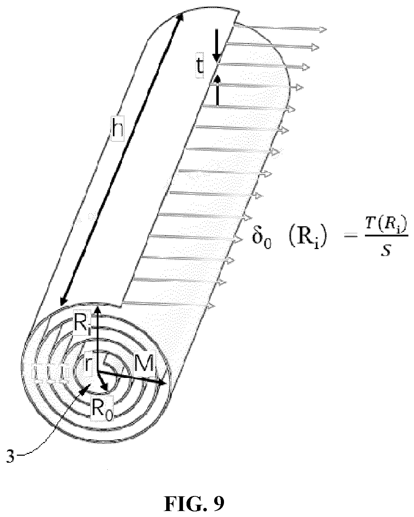

Assuming each layer of the wound core assembly (including positive and negative electrode materials) to be macroscopically isotropic, a representative structural unit can be selected for analysis. The representative structural unit should be sufficiently small to characterize individual components yet sufficiently large to represent the entire wound core assembly. Thus, the fundamental structure of the wound core assembly (separator - negative electrode - separator - positive electrode) is adopted as the representative unit. FIG. 9 schematically illustrates the winding; while FIG. 8 schematically depicts the representative structural unit. A cylindrical coordinate system is employed, with the axial direction as the z-axis and a length of 1 unit, without considering edge effects.

The wound thickness of the wound core assembly is denoted as $t$. After winding $i$ turns, the outer diameter is $R_i$.

Consider a point at the inner radius $r$ of the core, assuming this point lies within the $i$-th turn of the winding, i.e., $R_{i-1} \leq r < R_i$. After winding $n$ turns, the circumferential stress at any position $r$ within the wound core assembly equals the winding tensile stress at $r$ plus the sum of the circumferential stress distribution functions at $r$ caused by the multi-turn winding tensions $T(R_i)$, $T(R_{i+1})$, ..., $T(R_n)$ acting on the $i$-th to $n$-th turns, that is:

$$\sigma_\theta(r, R_n) = \frac{T(r)}{s} + \frac{1}{t}\left( \sum_{k=i}^{n} \left[ \sigma_\theta(r, R_k) \Delta R_k \right] \right).$$

The radial stress at any position $r$ within the core can also be derived as follows:

$$\sigma_r(r) = -\int_r^{R_n} \frac{\sigma_0(R) \cdot R_i}{(1 - 2\nu) \cdot R_0^2 + R_i^2} dR_i \cdot$$
$$\left[ 1 + (1 - 2\nu) \cdot \frac{R_0^2}{r^2} \right].$$

During discharge, as the negative electrode plate 2 contracts due to lithium-ion deintercalation, the core assembly imposes a circumferential stress on the positive electrode plate 1. The direction of this circumferential stress is parallel to the electrode plates and oriented away from the center of the winding; and the positive electrode plate 1 undergoes displacement in a direction away from the winding center.

During charge/discharge cycling, the central mandrel hole 3 undergoes cyclic expansion and contraction driven by lithium-ion intercalation/deintercalation in the negative electrode plate 2, leading to progressive slackening of the positive electrode plate 1 and deformation of the central mandrel hole 3. The strain within the wound core and the displacement of the end surface of the positive electrode plate 1 during cycling are defined as follows:

$$u(r, R_n) = \frac{1 - \nu^2}{E}\left( \sigma_0(r) - \int_r^{R_n} \right.$$
$$\left. \frac{\sigma_0(R_i) \cdot R_i}{(1 - 2\nu) \cdot R_0^2 + R_i^2} dR_i \cdot \frac{1 - 2\nu}{1 - \nu}\left( 1 - \frac{R_0^2}{r^2} \right) \right) \cdot r.$$

By cutting a specific shape into the inner winding portion (first winding turn) of the positive electrode plate 1, the stress generated by the cyclic expansion/contraction of the core assembly during charge/discharge cycles can be uniformly distributed across the cutout region of the positive electrode plate 1. This creates a stress gradient within the cutout region, thereby reducing the degree of slackening and offset of the positive electrode plate 1 inside the core assembly.

During charging, lithium ions are intercalated into the negative electrode plate 2, causing the negative electrode plate 2 to expand and thereby inducing the wound core assembly expansion. Under the constraint of the steel housing, the resulting stress is concentrated toward the central mandrel hole 3. In the region of the central mandrel hole 3, the circumferential stress acting on the positive electrode plate 1 is directed toward the winding center. However, the end surface of the positive electrode plate 1 is inclined, and accordingly, the inclined end surface of the positive electrode plate 1 resolves this stress into two components: a circumferential stress component F1, and an axial stress component F2 parallel to the central axis of the wound core. The axial stress F2 parallel to the central axis of the wound core is counteracted by the steel housing constraining both ends of the battery. The motion of the positive electrode plate 1 is driven by the resolved circumferential stress F1, which exhibits a linear gradient distribution across the inclined end surface of the positive electrode plate 1. Compared to the uncut positive electrode plate 1, the cut end surface of the modified positive electrode plate 1 results in a reduced magnitude of F1, thereby effectively mitigating deformation of the central mandrel hole 3 of the wound core.

Those skilled in the art will recognize that numerous modifications to the details of the above-described embodiments may be made without departing from the fundamental principles of the disclosed subject matter. Accordingly, the scope of the present disclosure shall be determined solely by the claims and their legal equivalents.

**Claims**

1. A wound core assembly, comprising a positive electrode plate and a negative electrode plate, with a separator disposed between the positive electrode plate and the negative electrode plate, the wound core assembly having a central mandrel hole at a winding center thereof, wherein:

   a termination edge of the positive electrode plate adjacent to the central mandrel hole is configured with an inclined segment, two ends of the inclined segment along its longitudinal axis are respectively positioned at widthwise edges of the positive electrode plate; or the termination edge is structured as a convex edge; or the termination edge is structured as a concave edge;
   and/or,
   a termination edge of the negative electrode plate adjacent to the central mandrel hole is configured with an inclined segment, two ends of the inclined segment along its longitudinal axis are respectively positioned at widthwise edges of the negative electrode plate; or the termination edge is structured as a convex edge; or the termination edge is structured as a concave edge.

2. The wound core assembly according to claim 1, wherein the convex edge is an axisymmetric structure, and a symmetry axis of the convex edge is aligned with a widthwise geometric midline of the positive electrode plate or the negative electrode plate.

3. The wound core assembly according to claim 1, wherein the concave edge is an axisymmetric structure, and a symmetry axis of the concave edge coincides with a widthwise geometric midline of the positive electrode plate or the negative electrode plate.

4. The wound core assembly according to any one of claims 1 to 3, wherein the convex edge has an arc-shaped protrusion as its contour.

5. The wound core assembly according to any one of claims 1 to 3, wherein the concave edge has an arc-shaped recess as its contour.

6. The wound core assembly according to any one of claims 1 to 3, wherein the two ends of the inclined segment along its longitudinal axis intersect with the widthwise edges of the positive electrode plate or the negative electrode plate.

7. The wound core assembly according to claim 6, wherein the inclined segment occupies a number of winding turns $n$ of the positive electrode plate or the negative electrode plate, wherein $0.1 \leq n \leq 5$.

8. The wound core assembly according to any one of claims 1-3, wherein the two ends of the inclined segment along its longitudinal axis are connected to the widthwise edges of the positive electrode plate or the negative electrode plate via fillets; or

   two ends of the convex edge are connected to the widthwise edges of the positive electrode plate or the negative electrode plate via fillets; or
   two ends of the concave edge are connected to the widthwise edges of the positive electrode plate or the negative electrode plate via fillets.

9. The wound core assembly according to any one of claims 1-3, wherein the separator comprises a first separator and a second separator, wherein along a radial direction away from the central mandrel hole, the negative electrode plate, the first separator, the positive electrode plate, and the second separator are sequentially stacked.

10. A wound battery, comprising:

    the wound core assembly according to any one of claims 1 to 9; and
    a housing, configured to encapsulate the wound core assembly and infused with an electrolyte.

**FIG. 1**

**FIG. 2**

6(61)

**FIG. 3**

6(62)

**FIG. 4**

7

6(61)

**FIG. 5**

F

6

**FIG. 6**

F1

F

F2

61

**FIG. 7**

5

1

4

2

circumferential
(θ direction)

radial (r direction)

**FIG. 8**

$$\delta_0 \ (R_i) = \frac{T(R_i)}{S}$$

**FIG. 9**

## INTERNATIONAL SEARCH REPORT

<table>
<tr><td colspan="2">International application No.</td></tr>
<tr><td colspan="2">**PCT/CN2024/136980**</td></tr>
</table>

**A.     CLASSIFICATION OF SUBJECT MATTER**

H01M10/0587(2010.01)i

According to International Patent Classification (IPC) or to both national classification and IPC

**B.     FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 电芯, 卷芯, 电极, 卷绕, 中心, 倾斜, 斜面, 斜边, 凹, 凸, 应力, 分散, cell, battery, core, electrode, roll, center, incline, slope, lean, tilt, protru+, groove, stress, disperse

**C.     DOCUMENTS CONSIDERED TO BE RELEVANT**

| Category* | Citation of document, with indication, where appropriate, of the relevant passages | Relevant to claim No. |
|---|---|---|
| X | CN 115053375 A (SAMSUNG SDI CO., LTD.) 13 September 2022 (2022-09-13) description, paragraphs 5-68, and figures 1-5 | 1-10 |
| X | CN 102612783 A (PANASONIC CORP.) 25 July 2012 (2012-07-25) description, paragraphs 11-162, and figures 1-9 | 1-10 |
| A | CN 210926190 U (GUANGZHOU HONGSEN MATERIAL CO., LTD.) 03 July 2020 (2020-07-03) entire document | 1-10 |
| A | CN 110556565 A (PANASONIC INTELLECTUAL PROPERTY MANAGEMENT CO., LTD.) 10 December 2019 (2019-12-10) entire document | 1-10 |
| A | CN 116259707 A (EVE POWER CO., LTD.) 13 June 2023 (2023-06-13) entire document | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 February 2025** | **26 February 2025** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/136980**

| Patent document cited in search report | | | Publication date (day/month/year) | Patent family member(s) | | | Publication date (day/month/year) |
|---|---|---|---|---|---|---|---|
| CN | 115053375 | A | 13 September 2022 | US | 2023059201 | A1 | 23 February 2023 |
| | | | | EP | 4106064 | A1 | 21 December 2022 |
| | | | | EP | 4106064 | A4 | 15 January 2025 |
| | | | | JP | 2023508413 | A | 02 March 2023 |
| | | | | JP | 7417744 | B2 | 18 January 2024 |
| | | | | KR | 20210103745 | A | 24 August 2021 |
| | | | | WO | 2021162330 | A1 | 19 August 2021 |
| CN | 102612783 | A | 25 July 2012 | US | 2012225337 | A1 | 06 September 2012 |
| | | | | JP | 5129412 | B2 | 30 January 2013 |
| | | | | JPWO | 2012039091 | A1 | 03 February 2014 |
| | | | | WO | 2012039091 | A1 | 29 March 2012 |
| CN | 210926190 | U | 03 July 2020 | | None | | |
| CN | 110556565 | A | 10 December 2019 | JP | 2019212608 | A | 12 December 2019 |
| | | | | JP | 7209258 | B2 | 20 January 2023 |
| | | | | US | 2019372170 | A1 | 05 December 2019 |
| | | | | US | 10916810 | B2 | 09 February 2021 |
| | | | | EP | 3576184 | A1 | 04 December 2019 |
| | | | | EP | 3576184 | B1 | 31 May 2023 |
| CN | 116259707 | A | 13 June 2023 | | None | | |

Form PCT/ISA/210 (patent family annex) (July 2022)